# EUROPEAN PATENT APPLICATION

(11) **EP 4 696 667 A1**
(43) Date of publication of application: **18.02.2026**
(21) Application number: 24382903.3
(22) Date of filing: 12.08.2024
(51) Int. Cl.: C04B 18/10, C04B 28/02

(54) **METHOD OF TILING A SURFACE WITH REDUCED CARBON FOOTPRINT**

(71) Applicant: Sika Technology AG, 6340 Baar (CH)
(72) Inventor: BROSSAS, Hervé, 38070 ST QUENTIN FALLAVIER (FR); GONCALO, Paulo, 38070 ST QUENTIN FALLAVIER (FR); DIMITRAKOPOULOU, Ariadni, 69181 LEIMEN (DE); QUESADA, Javier, 28108 ALCOBENDAS (Madrid) (ES)
(74) Representative: Sika Patent Attorneys

(57) **Abstract**

The present invention relates to methods of tiling a surface with cementitious tile adhesives and to tiled surfaces whereby the carbon footprint per m² of the tiled surface is reduced by the use of biochar in the cementitious tile adhesive.

## Description

### TECHNICAL FIELD

The present invention relates to surface tiling with cementitious tile adhesives and to tiled surfaces whereby biochar is used to reduce the carbon footprint per m² of the tiled surface.

### BACKGROUND OF THE INVENTION

The use of cementitious tile adhesives is well known in the field of surface tiling. The performance of cementitious tile adhesives is regulated by international construction standards. For example, in Europe, cementitious tile adhesives used with ceramic tiles must be in conformity with standard EN 12004:2007. In the US, standard specifications ANSI A118/A136.1:2024 define the test methods and physical properties for ceramic tile installation materials. To achieve the required performance, cementitious tile adhesives typically have been formulated with Ordinary Portland Cement.

It is nowadays a goal to reduce the environmental footprint of buildings. For example, it is a general desire to reduce the carbon footprint per m² of tiled surfaces. In this respect, the use of Ordinary Portland Cement as a binder for cementitious tile adhesives is especially problematic because of its high carbon footprint (appr. 800 kg of CO₂ are being released to the atmosphere for every ton of Ordinary Portland Cement produced). Many efforts have therefore been made to replace Ordinary Portland Cement in part or fully by other binders with lower carbon footprint in cementitious tile adhesives.

Another approach to reduce the carbon footprint of cementitious materials is the use of biochar. For example, US 2022/0298073 (Alliance for Sustainable Energy, Colorado School of Mines) discloses cementitious composition comprising hydraulic cement and biochar. These compositions are reported to have a reduced carbon footprint as cement is replaced by biochar. However, the replacement of cement often leads to a loss of performance.

There remains a need for methods to lower the carbon footprint per m² of a tiled surface.

### SUMMARY OF THE INVENTION

It is an objective of the present invention to provide methods of tiling a surface with the use of a cementitious tile adhesive, whereby the carbon footprint per m² of the tiled surface is reduced. In particular, a lower carbon footprint per m² of the tiled surface should be achieved without a loss of performance of components of the tiled surface, especially without loss of performance of the cementitious tile adhesive.

This objective is solved by a method as claimed in claim 1.

Other aspects of the present invention are the object of independent claims.

Preferred embodiments are the object of dependent claims.

### DETAILED WAYS

In a first aspect the present invention relates to a method of tiling a surface comprising the steps of
a) receiving a job specification for a surface to be tiled including requirements for a cementitious tile adhesive;
b) providing a cementitious tile adhesive suitable to meet the requirements, said cementitious tile adhesive comprising biochar in an amount suitable to reduce the carbon footprint per m² of the tiled surface,
c) mixing the cementitious tile adhesive with water and applying the mixture thus obtained to the surface to be tiled.

A tiled surface, within the present context, can be a floor, a wall, or a ceiling of a building. A tiled surface can be inside or outside. A tiled surface comprises several components such as a substrate, a cementitious tile adhesive, at least one tile, and optionally further components such as primers, tapes, sealants, joint grouts, and decoupling membranes.

The substrate can be any material typically used in construction, especially mineral substrates such as concrete, a screed, stones, or bricks. A tile within the present context preferably is a ceramic tile, especially a ceramic tile according to standard EN 14411.

The composition of cementitious tile adhesives is generally known to the skilled person. For example, cementitious tile adhesive formulations are disclosed in the Article "Dry Mortars" by H. Lutz and R. Bayer in Ullmann's Encyclopedia of Industrial Chemistry (Vol. 11, 2012, Wiley-VCH) on pages 563 - 566. A cementitious tile adhesive within the present context thus comprises constituents typically used for the formulation of cementitious tile adhesives such as cement, aggregates, optionally fillers and organic polymers. A cementitious tile adhesive of the present invention additionally comprises biochar.

Requirements for the cementitious tile adhesive are not particularly limited. The requirements for a cementitious tile adhesive can in particular be any of the requirements for cementitious tile adhesive in standard EN 12004:2007. For example, the requirement can be expressed as C1, C1E, C1F, C1FT, C2, C2E, C2F, C2S1, C2S2, C2FT, C2FTS1. The requirements likewise can be any of the standard specifications of ANSI A118/A136.1:2024.

In particular, in a method of the present invention, the carbon footprint of a tiled surface is reduced as compared to the same tiled surface prepared with a cementitious tile adhesive without biochar. In other words, the reduction of the carbon footprint of the tiled surface is achieved by the presence of biochar in the cementitious tile adhesive. The cementitious tile adhesive comprising biochar has a reduced carbon footprint as compared to the same cementitious tile adhesive not comprising biochar. Especially, the carbon footprint of the cementitious tile adhesive comprising biochar is reduced by at least 10%, preferably at least 50%, more preferably at least 100%. A reduction of the carbon footprint of more than 100% means that the carbon footprint of the cementitious tile adhesive becomes negative. A preferred cementitious tile adhesive comprising biochar has a negative carbon footprint. An exemplary calculation of carbon footprint reduction is provided further below.

It is preferred within the present context that the carbon footprint is reduced by at least 2%, preferably at least 10%, more preferably at least 30%, still more preferably at least 60%, especially at least 90%.

Carbon footprint can, for example, be calculated as CO₂ equivalents per kilogram.

Biochar, in the present context, is a carbon-rich product that remains after biomass is thermodynamically converted in a pyrolysis process, especially in the absence or limited presence of oxygen. Thereby, the carbon stored in the biomass becomes locked in the biochar.

According to embodiments, the biochar of the present invention is obtained by pyrolysis, preferably by slow pyrolysis, of woody biomass, herbaceous biomass, agricultural biomass, waste biomass, or manure biomass. Particularly well suited starting materials are wood chips, spelt husks, grass, straw, or animal manure.

During slow pyrolysis, biomass feedstocks are decomposed at temperatures between 300 and 900 °C with little or no oxygen. In slow pyrolysis the feedstock is heated at a low heating rate and reacted for minutes or hours to even days. Slow pyrolysis can, for example, be done in a fixed bed reactor, a fluidized bed reactor, or an auger.

Biochar has a negative carbon footprint and/or has a carbon sequestration potential.

A preferred biochar of the present invention has an ash content of not more than 10 w%, preferably not more than 7.5 w%, still more preferably not more than 5 w%, relative to the total dry weight of the biochar.

A preferred biochar of the present invention comprises an amount of fixed carbon of between 40 - 90 w%, preferably 60 - 85 w%, relative to the total dry weight of the biochar.

The oxygen content, of a biochar of the present invention, preferably is not higher than 50 w%, more preferably not higher than 25 w%, especially not higher than 15 w%, relative to the total dry weight of the biochar.

A preferred biochar of the present invention has a density which is lower than the density of a standard cementitious tile adhesive. In particular, the biochar has a density which is lower than the density of the cementitious tile adhesive to which it is added. This has the advantage that the density of the cementitious tile adhesive is lowered which in turn leads to a lower consumption in kg/m² of the tiled surface. The density of biochar can be measured by helium pycnometry as described in standard ISO 12154:2014.

A preferred biochar of the present invention has a density of between 1.0 - 2.0 g/cm³, preferably 1.3 - 1.8 g/cm³, measured by helium pycnometry.

According to embodiments, in the method of the present invention, step b) comprises the sub-steps of
b1) providing a formulation of cementitious tile adhesive suitable to fulfill the requirements;
b2) modifying the formulation provided in step b1) by introducing an amount of biochar suitable to reduce the carbon footprint into the formulation, to provide a biochar modified formulation;
b3) simulating and/or testing the suitability of the biochar modified formulation obtained in step b2) to fulfill the requirements for the cementitious tile adhesive;
b4) in case in step b3) the biochar modified formulation is found suitable to fulfill the requirements, manufacturing a biochar modified tile adhesive based on the biochar modified formulation.

A formulation within the present context is a recipe, especially a recipe useful for manufacture. The formulation in particular contains information about the constituents and their respective dosages as well as information about the mixing procedure. A cementitious tile adhesive can therefore be manufactured according to a formulation of cementitious tile adhesive.

"Biochar modified" means that a certain amount of biochar is contained.

It is possible that the formulation of cementitious tile adhesive provided in step b1) does not contain biochar.

The biochar introduced into the formulation in step b2) can, for example, be introduced by replacing some of the cement, aggregates, or fillers contained with biochar. Replacement preferably is done by weight. This means that the respective weight percentage of cement, aggregates, or fillers is reduced by the same weight percentage of biochar introduced. This may have the advantage that additional reduction of carbon footprint is possible where a constituent with high carbon footprint is replaced by biochar. It is likewise possible to introduce the biochar in step b2) by adding a certain amount of biochar on top of the formulation. This means, that the respective weight percentages of all raw materials in the cementitious tile adhesive are reduced while biochar is added to add up to 100 w%. This has the advantage that the weight ratios of all other constituents besides biochar remain the same.

Simulation and/or testing in step b3) may involve the manufacture of a biochar modified cementitious tile adhesive according to the biochar modified formulation.

In cases where the simulation and/or testing shows that a cementitious tile adhesive manufactured according to the biochar modified formulation is suitable to fulfill the requirements for the cementitious tile adhesive, it may be desirable to repeat steps b1) to b3) based on the biochar modified formulation. This is particularly desirable because a tiled surface results with desired performance and minimal carbon footprint per m² of tiled surface.

Therefore, in the method of the present invention, in case the biochar modified formulation is found in step b3) to fulfill the requirements for cementitious tile adhesive, steps b1) to b3) are repeated before step b4), whereby the biochar modified formulation obtained in step b2) is provided in step b1), until in step b3) the requirements are not met anymore or are repeated for a predefined number of cycles.

It is clear that introduction of increasing amounts of biochar into a cementitious tile adhesive may reduce its performance. If too high an amount of biochar is added, the cementitious tile adhesive may not be suitable anymore to fulfill the requirements. It is then desirable to reduce the biochar content.

Therefore, in the method of the present invention, in case in step b3) the biochar modified formulation is found to not fulfill the requirements, the amount of biochar introduced in step b2) is reduced and step b3) is repeated.

Requirements for the cementitious tile adhesive are not particularly limited. The requirements for a cementitious tile adhesive can in particular be any of the requirements for cementitious tile adhesive in standard EN 12004:2007. For example, the requirement can be expressed as C1, C1E, C1F, C1FT, C2, C2E, C2F, C2S1, C2S2, C2FT, C2FTS1. The requirements likewise can be any of the standard specifications of ANSI A118/A136.1:2024.

According to embodiments, the requirements for the cementitious tile adhesive are selected from the density, the applied layer thickness, the maximum weight of cementitious tile adhesive applied per m², the slip, the transverse deformation, the chemical resistance, the reaction to fire, and/or the strength of the cementitious tile adhesive.

The strength especially is the tensile adhesion strength. Tensile adhesion strength in particular is measured directly after application, or after an open time of 10 min, 20 min, or 30 min, or after no more than 6h of hardening. Tensile adhesion strength can also be measured after water immersion, after heat ageing, or after freeze-thaw cycles. Measurements can be done as described in standard EN 12004:2007.

In another aspect the present invention relates to a tiled surface obtained by a method as described above.

All features and embodiments described above also apply to this aspect.

The tiled surface can be a part of a building. For example, the tiled surface can be a floor, a wall, or a ceiling. The tiled surface can be inside or outside. The tiled surface can be part of a balcony, a swimming pool, or a wet room such as a kitchen or a bathroom.

In particular, the tiled surface has a negative carbon footprint.

### EXAMPLES

For the calculation of the carbon footprint reduction it can be assumed that the biochar has a carbon sequestration potential of 2.2 g of CO₂ per g of biochar (corresponding to 60% fixed carbon in biochar). If 1 g of biochar with a density of 1.5 as measured by helium pycnometer is added to 10 g of a standard cementitious tile adhesive (C1 according to EN 12004:2007) the carbon footprint of the cementitious tile adhesive (in CO₂ equivalents per kg) can be reduced by appr. 10%. In thin-bed mortar technique, the cementitious tile adhesive can be applied in a layer thickness of up to 4 mm, resulting in a consumption of 4 liters of cementitious tile adhesive per m² of tiled surface. With a standard density of 2.0 kg/L of wet cementitious tile adhesive not comprising biochar, the usage of cementitious tile adhesive not comprising biochar is 8 kg per m² of tiled surface. Because biochar has a lower density as compared to an unmodified standard cementitious tile adhesive, biochar introduction into a standard cementitious tile adhesive reduces the density. This leads to a lower consumption in kg per m² of tiled surface, thereby further reducing the carbon footprint per m² of tiled surface. In the above example, the density of the cementitious tile adhesive is reduced by appr. 3% leading to a usage of cementitious tile adhesive comprising biochar which is also lowered by appr. 3% and thereby leading to a reduction of the carbon footprint per m² of tiled surface of 3%. In this example, the reduction of carbon footprint by the biochar therefore is twofold.

## Claims

1. A method of tiling a surface comprising the steps of
a) Receiving a job specification for a surface to be tiled including requirements for a cementitious tile adhesive;
b) Providing a cementitious tile adhesive suitable to meet the requirements, said cementitious tile adhesive comprising biochar in an amount suitable to reduce the carbon footprint per m² of the tiled surface,
c) Mixing the cementitious tile adhesive with water and applying the mixture thus obtained to the surface to be tiled.

2. The method as claimed in claim 1, whereby the carbon footprint of the tiled surface is reduced as compared to the same tiled surface prepared with a cementitious tile adhesive without biochar.

3. The method as claimed in at least one of claims 1-2, whereby the carbon footprint is reduced by at least 2%, preferably at least 10%, more preferably at least 30%, still more preferably at least 60%, especially at least 90%.

4. The method as claimed in at least one of claims 1-3, whereby step b) comprises the sub-steps of
b1) providing a formulation of cementitious tile adhesive suitable to fulfill the requirements;
b2) modifying the formulation provided in step b1) by introducing an amount of biochar suitable to reduce the carbon footprint into the formulation, to provide a biochar modified formulation;
b3) simulating and/or testing the suitability of the biochar modified formulation obtained in step b2) to fulfill the requirements for the cementitious tile adhesive;
b4) in case in step b3) the biochar modified formulation is found suitable to fulfill the requirements, manufacturing a biochar modified tile adhesive based on the biochar modified formulation.

5. The method as claimed in claim 4, whereby in case the biochar modified formulation is found in step b3) to fulfill the requirements, steps b1) to b3) are repeated before step b4), whereby the biochar modified formulation obtained in step b2) is provided in step b1), until in step b3) the requirements are not met anymore or are repeated for a predefined number of cycles.

6. The method as claimed in at least one of claims 4-5, whereby, in case in step b3) the biochar modified formulation is found to not fulfill the requirements, the amount of biochar introduced in step b2) is reduced and step b3) is repeated.

7. The method as claimed in at least one of claims 1-6, whereby the requirements for the cementitious tile adhesive are selected from the density, the applied layer thickness, the maximum weight of cementitious tile adhesive applied per m², the slip, the transverse deformation, the chemical resistance, the reaction to fire, and/or the strength of the cementitious tile adhesive.

8. The method as claimed in at least one of claims 1-7, whereby the biochar is obtained by pyrolysis, preferably by slow pyrolysis, of woody biomass, herbaceous biomass, agricultural biomass, waste biomass, or manure biomass.

9. The method as claimed in at least one of claims 1-8, whereby the biochar comprises an amount of fixed carbon of between 40 - 90 w%, preferably 60 - 85 w%, relative to the total dry weight of the biochar.

10. The method as claimed in at least one of claims 1-9, whereby the biochar has a density of between 1.0 - 2.0 g/cm³, preferably 1.3 - 1.8 g/cm³, measured by helium pycnometry.

11. A tiled surface obtained by a method as claimed in at least one of claims 1-10.

12. The tiled surface as claimed in claim 11, whereby the carbon footprint of the tiled surface is negative.
